Europäisches Patentamt

European Patent Office

Office européen des brevets

(11) Publication number: **0 166 445**
**B1**

# EUROPEAN PATENT SPECIFICATION

(45) Date of publication of patent specification: 06.09.89

(51) Int. Cl.⁴: **C 04 B 35/48,** C 04 B 41/87 //
G01N27/56

(21) Application number: 85107989.7

(22) Date of filing: 27.06.85

(54) **Reinforced zirconia-base sintered body, process for producing the same, and plate-like zirconia-base electrolyte function element.**

(30) Priority: 27.06.84 JP 130937/84
21.08.84 JP 172352/84

(43) Date of publication of application:
02.01.86 Bulletin 86/01

(45) Publication of the grant of the patent:
06.09.89 Bulletin 89/36

(84) Designated Contracting States:
DE FR GB

(56) References cited:
EP-A-0 008 175
DE-A-2 754 522
DE-A-2 810 134
US-A-3 935 089
US-A-4 224 113

PATENT ABSTRACTS OF JAPAN, vol. 9, no. 20
(P-330)1743r, 26th January 1985; & JP - A - 59
166 854 (TOYODA CHUO KENKYUSHO K.K.)
20-09-1984

(73) Proprietor: NGK Spark Plug Co. Ltd.
No. 14-18, Takatsuji-cho Mizuho-ku
Nagoya-shi Aichi-ken 467 (JP)

(72) Inventor: Kojima, Takao
Sunpark Higashibetsuin 1002 5-19, Ooi-cho
Naka-ku Nagoya-shi (JP)
Inventor: Ishiguro, Hiroyuki
5-65, Inou-cho Nishi-ku
Nagoya-shi Aichi (JP)
Inventor: Kawachi, Yoshiki
Kosin Kawahara 11 Moriyama-ku
Nagoya-shi Aichi (JP)
Inventor: Yamada, Tetsusyo
Tsuchihara 1-118 Tenpaku-ku
Nagoya-shi Aichi (JP)

(74) Representative: Diehl, Hermann O. Th., Dr. et al
Diehl & Partner Flüggenstrasse 13
D-8000 München 19 (DE)

# EP 0 166 445 B1

**Description**

This invention relates to a reinforced zirconia base sintered body suitable for serving as a plate-like zirconia base solid electrolyte, which is used for fuel cells, various sensors and the like, and to a process for producing such a sintered body.

Furthermore, this invention relates to a plate-like zirconia solid electrolyte functional element and, more particularly, to a plate-like zirconia solid electrolyte functional element in which it is very unlikely that breaking accidents may arise during processing or assembling, or in use, and the insulating properties of the lead portion is considerably improved over the conventional elements.

In general, the functions that solid electrolytes have are largely classified into three functions, electromotive function due to an activity difference, selective ion transmission function and uneven ion distribution function. Referring to the electromotive function out of these functions, a reference substance having known activity and a substance to be measured are allowed to be in contact the opposite sides of a plate-like solid electrolyte. The activity of the substance to be measured can then be determined from an electromotive force value produced therebetween.

In recent years, rapidly increasing attention is paid to ceramic sensors making use of solid electrolytes, and such sensors are now used in large fields. In particular, oxygen sensors making use of zirconia ceramics are of sharp responsiveness and are stable as regards electromotive force, so that a partial oxygen pressure can be detected over an extensive range. Also these oxygen sensors have the advantage that they can stand up to high temperatures. For these reasons, they are now used in various fields in which energy saving, prevention of environmental pollution, etc. are intended, including combustion controls for automobile engines and detectors for partial or incomplete combustion in domestic gas water heaters.

In oxygen sensors using the electromotive functions of solid electrolytes, for instance, those incorporating $ZrO_2$-base plate-like solid electrolytes, the $ZrO_2$ is partially stabilized by the addition of small amounts of stabilizers such as $Y_2O_3$. For instance, the amounts of $Y_2O_3$ to be added has been usually about 4.5 mol % to maintain the mechanical strength at a given value or higher.

However, if it is intended to increase the mechanical strength by reducing the amount of $Y_2O_3$, the bending strength reaches as high as 50 kg/mm$^2$ or more, but there is a drop of electrical conductivity so that the $ZrO_2$ element insufficiently functions as a resistor. On the contrary, the addition of $Y_2O_3$ in an amount exceeding 6 mol % results in improvements in electrical conductivity, but causes a reduction of a bending strength to 30 kg/mm$^2$ or less.

Generally, the sensing element of oxygen sensors is constructed by attaching platinum electrodes to both sides of a wholly or partially stabilized zirconia solid electrolyte-base thin plate. However, since it has a thickness on the order of about several millimeters, it is very likely that it may be easily broken during processing or assembling, or in use. Thus, there is a demand for the development of detection elements excelling in mechanical strength.

One object (first aspect) of the present invention is to provide wholly or partially stabilized zirconia-base sintered bodies which function satisfactorily as solid electrolytes and have improved mechanical strength. This object is solved by the teaching of claim 1. Further advantageous features are evident from subclaims 2 to 4.

It is another object (second aspect) of the present invention to provide a process for the production of the sintered bodies of the same type as mentioned for the first aspect. This object is solved by the features of claim 5.

A further object (third aspect) of the present invention is to provide reinforced zirconia-base electrolyte function elements having improved mechanical strength and excellent performance. This object is solved by the features of claim 6. Further advantageous features are evident from claims 7 to 13. The invention also deals with a process for the production of such electrolyte function elements.

Still other objects will become apparent in the entire disclosure.

According to the first aspect of the present invention there is provided a partially or wholly stabilized zirconia-base reinforced sintered body characterized in that a plate-like sintered substrate of a partially or wholly stabilized zirconia-base sintered mass provided on each side thereof with an alumina-base protective layer having a given thickness. The thickness ratio of each alumina-base protective layer to said plate-like sintered substrate should be 1/100 to 25/100.

According to a second aspect of the present invention there is provided a process for the production of partially or wholly stabilized zirconia-base reinforced sintered bodies comprising:

providing a green alumina protective layer on each side of a plate-like zirconia-base substrate, and

sintering the resultant mass so as to simultaneously sinter the substrate and the protective layers to form an integral sintered body.

According to a third aspect of the present invention there is provided a plate-like zirconia-base solid electrolyte functional element comprising a plate-like zirconia-base solid electrolyte substrate, the substrate including at its free end an electrochemically operable portion provided with an electrode on each side of the substrate, another portion (e.g., another end portion) to be retained, and an arm portion defined by an intermediate portion between the free end and said another portion, characterized in that a reinforcing coating layer is formed on each side of said zirconia-base solid electrolyte substrate, the reinforcing coating layers extending at least from said arm portion to said another portion to be retained,

2

said coating layers being formed of an electrically insulating ceramic material having a shrinkage modulus smaller than that of said zirconia-base solid electrolyte substrate.

The insulating ceramic material is preferably alpha-alumina. It is preferred that the zirconia-base solid electrolyte is wholly or partially stabilized primarily by yttrium oxide. The ratio of the shrinkage modulus between said zirconia-base electrolyte substrate and the ceramic material forming the coating layers should be 1.01 to 1.08. The thickness ratio of each of said coating layers and said zirconia solid electrolyte plate generally ranges from 1/100 to 25/100. The zirconia-base solid electrolyte substrate may have a thickness of 0.1 to 5 mm (preferably 0.1 to 2 mm). A lead portion may be formed on the surface of said insulating ceramic material.

In the following preferred embodiments of the invention will be described in the context of the accompanying drawings.

Fig. 1 shows the bending strength of a basic test piece.

Fig. 2 illustrates a reinforced zirconia-based sintered body.

Figs. 3 to 4 illustrate a functional element based on a reinforced zirconia solid electrolyte (test piece no. 41), in which electrode and lead layers are formed on the reinforced zirconia solid electrolyte substrate having dense layers of alumina on both sides thereof.

Fig. 5 shows another functional element based on a reinforced zirconia solid electrolyte.

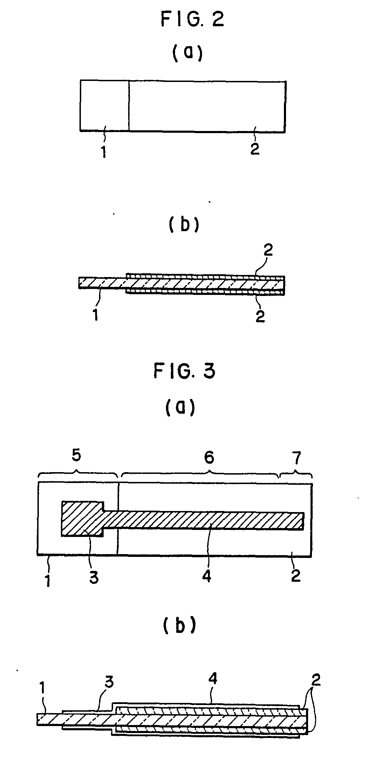

It is to be noted that in Figs. 2 to 5 (a) is a plan and (b) is a side view, respectively.

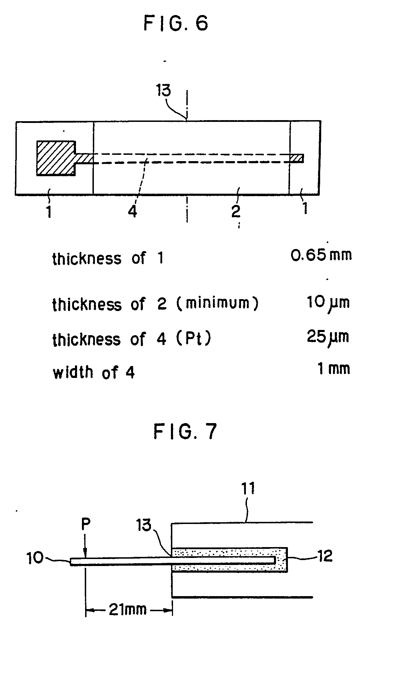

Figs. 6 and 7 illustrate the method for measuring the bending strength values as specified in Table 2.

The reinforced sintered body based on partially or wholly stabilized $ZrO_2$ according to the first aspect of the present invention includes a plate-like substrate and $Al_2O_3$-base protective layers of a given thickness, which are applied on each side of the substrate. In the present disclosure, the wording "plate-like" means any profiles such as plates (or sheets), curved plates or other configurations (generally, pipes) formed of such curved plates.

According to the second aspect of the invention, the protective layers and the substrate are simultaneously sintered into a plate-like integral sintered body.

The thickness ratio of one protective layer of $Al_2O_3$ to the $ZrO_2$-base sintered substrate should be 1/100 to 25/100, preferably 1/100 to 20/100, most preferably 5/100 to 15/100. If required, the protective layer may be formed partly or entirely over the plate-like substrate.

According to the foregoing arrangement, it is possible to achieve a mechanical strength higher than that of the sintered body comprising the substrate alone by a factor of twice or more, since the protective layers and the substrate contract integrally, and synergically interact with each other. According to the present invention, the thus obtained strength exceeds that of the $Al_2O_3$-base layers *per se* used as the protective layers. This is considered to be due to the fact that the shrinkage modulus (shrinkage modulus = green size/ sintered size) of the substrate and the protective layers (coating material) are used in varied combinations upon sintering the substrate onto which the protective layers have been applied. More specifically, to make the ratio of the shrinkage modulus of the coating material smaller than that of the substrate would cause the coating material to shrink to a higher degree than the original degree of shrinkage during sintering resulting in further densification, and produce therein a compression stress. It is considered that the higher the difference in the relative ratio of the shrinkage moduli between the coating material and the substrate, the greater the resulting effect, provided that the sintered body must be free from any cracks, warpage, etc. Preferably, the ratio of the shrinkage modulus of the substrate to that of the coating material should be in a range of 1.01 to 1.08, more preferably 1.03 to 1.06. The adjustment of the ratio of the shrinkage modulus may be effected preferably in the following manner. In general, zirconia raw material is pre-calcined to an appropriate extent for providing a zirconia-base solid electrolyte substrate (sheet). Thereupon, the calcination temperature should be kept to a considerably lower temperature, and the doctor blade method should be applied for sheet forming. The following is a typical procedure:

Mixing of materials — calcination (1300—1380°C) — pulverization — mixing with organic binder — sheet forming by the doctor blade method — screen printing of coating layers — organic binder removal (250°C) — sintering (about 1550°C). The protective layer is based on $Al_2O_3$, a preferable example of which is usually alpha-$Al_2O_3$ having a purity of, preferably, not lower than 90%. This is based on the concept that sufficient incorporation of thermally and chemically stable alpha-$Al_2O_3$ is preferable from the viewpoint of reinforcing layers. Hence, small amounts of other components may be added to alpha-$Al_2O_3$ as sintering aids or for like purposes. These components may include MgO, CaO, $SiO_2$, $ZrO_2$ or the like. CaO and $SiO_2$ are used mainly as the sintering aids, while $ZrO_2$ and MgO also have a grain growth inhibiting effect. Thus CaO and $SiO_2$ are used preferably in no more than 5% by weight.

In the present invention, it is required to make the $ZrO_2$-base substrate integral with the coating material and to use a dense coating material, which leads to the need of sintering the coating material at a temperature at which the substrate is sintered. Therefore, it is preferred that the sintering aids are added to the coating material.

In the following, a preferred embodiment of the process (Second Aspect) for the production of the reinforced sintered bodies will be explained. Stabilizers such as $Y_2O_3$, CaO, MgO, oxides of lanthanide, e.g., $Ce_2O_3$, $Yb_2O_3$, and the like are added to the starting $ZrO_2$ material in the predetermined amount (usually 4 to 10 mol %) for mixing in a ball mill, etc. Sintering aids ($Al_2O_3$, $SiO_2$, MgO) may be present up to 10 mol %, a preferred sintering aid being a composition of $Al_2O_3:SiO_2:MgO = 92:2:4$. After drying, the resulting mixture is calcined, and the obtained calcined powder is pulverized to obtain a starting material for the substrate. A binder such as an organic binder is added to the substrate, which is formed into a plate-like shape by means of the doctor blade, extrusion, pressing or the like technique to obtain a green shaped substrate based on $ZrO_2$, wherein $ZrO_2$ is partially or entirely stabilized. On the other hand, an organic binder is mixed with the starting $Al_2O_3$ material, and the resulting mixture is pasted to obtain a coating material.

The coating material is coated onto each side of the green substrate by means of paste printing or thermocompression bonding, and the resulting product is sintered at 1500 to 1550°C for 1 to 4 hours in an oxidizing atmosphere, whereby the protective layer-provided plate-like sintered body based on the substrate of partially or wholly stabilized $ZrO_2$ is obtained.

According to the present invention, a bending strength higher than that of a sintered plate-like body of coating material per se (e.g., $Al_2O_3$) can be assured, as noted from the experimental data to be given later.

The substrate of the reinforced sintered body, which can be produced in this manner, has a thickness of, ca., 0.1 to 5 mm, and is thinner than the conventional (single material sheet) product having the same strength by about 20 to 40%.

The third aspect of the present invention will now be explained hereinbelow. As mentioned previously, the sensing element of an oxygen sensor is generally constructed from a plate based on a partially or wholly stabilized zirconia electrolyte and electrodes (noble metal, e.g., platinum) attached onto both its sides. Due to its thickness of about a few to several millimeters, that element has been likely to fail during processing or assembling or in use.

The present inventors have found out that the problems as mentioned above are solved by the provision of a function element which is mentioned hereinabove as the third aspect of the present invention.

In Figs. 2 to 6 the numerals 1 to 9 represent as follows:

1 = solid electrolyte substrate,
2 = dense alumina layer,
3 = electrode,
4 = lead layer,
5 = electrochemically operating portion,
6 = arm portion,
7 = retaining portion,
8 = dense insulating protective layer,
9 = porous protective layer.

The partially or entirely stabilized zirconia reinforced sintered body used for the functional element based on the plate-like zirconia solid electrolyte according to the third aspect of the present invention is shown in Fig. 2 and includes a plate-like substrate 1 of partially or entirely stabilized zirconia and alumina ($Al_2O_3$)-base protective layers 2 (reinforcing coating layers) of a given thickness, which are formed on both sides of the substrate 1. The protective layers 2 and the substrate 1 are simultaneously sintered to obtain a plate-like integral sintered body. In this case, it is desired that the thickness ratio of the plate-like sintered substrate based on zirconia ($ZrO_2$) to one alumina protective layer is 1/100 to 25/100 (more preferably 1/100 to 20/100, and most preferably 5/100 to 15/100). The protective layer 2 includes at least an arm portion and a retaining portion (to be retained or fixed to a supporting member) and, if required, is formed partially or entirely over the plate-like sintered body except for the electrode portion. The method for forming the protective layers and the reason why the substrate is reinforced thereby have already mentioned in connection with the first and second aspects of the present invention.

The functional element based on the reinforced solid electrolyte according to the third aspect may be obtained by, for instance, providing as shown in Fig. 3 lead layers 4 and electrodes 3 on both sides of the thus obtained reinforced solid electrolyte plate by means of one of the techniques well-known in the art such as screen printing. Alternatively, it may be obtained by forming a green pattern for lead wires and electrodes on a green substrate of the aforesaid reinforced zirconia solid electrolyte, followed by simultaneous sintering. Usually, noble metal like platinum may be used for the electrodes and lead wires.

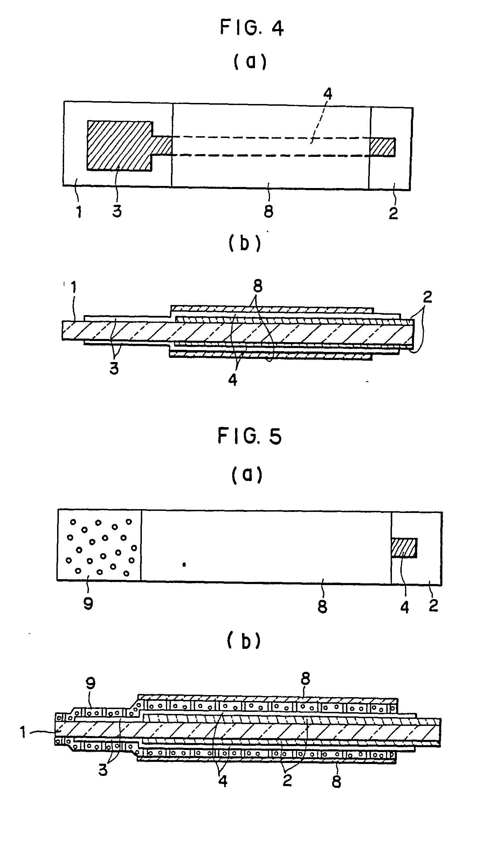

If required, an additional dense layer of alumina 8 may be applied on the surface of the arm portion, thereby obtaining an element in which the insulating properties of the lead portions is further improved (Fig. 4(a), (b)). In addition, as shown in Fig. 5(a), (b), the provision of a porous protective layer 9 over the entire surface of the element may make the electrode and lead portions resistant against corrosive gases, etc. The porous material may be alumina or other ceramics. A dense insulating protective layer 8, e.g., alumina may be provided on the porous protective layer 9.

The present invention is also taken as being applicable to oxygen concentration cells, oxygen pumps, etc. with additional construction means. A ceramic coating layer similar to that applied to the arm portion may be applied over the circumference and both sides of the electrochemically operable portion for further increases in the stability thereof.

4

# EP 0 166 445 B1

## EXAMPLES

### Example 1

The first aspect of the present invention will now be explained with reference to the example. Also, the process (second aspect) for producing the reinforced plate-like sintered bodies based on partially or wholly stabilized $ZrO_2$ will be explained.

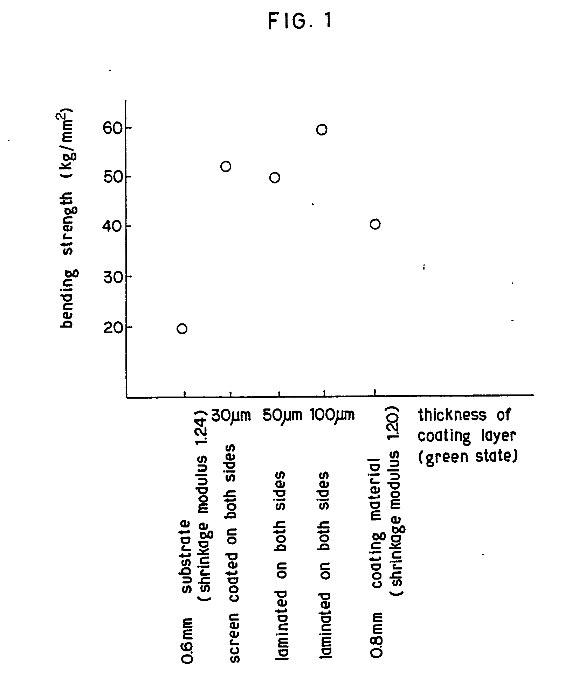

Test pieces of a reinforced zirconia electrolyte provided with alumina layers coated onto both sides of a zirconia solid electrolyte substrate were prepared to measure the bending strength thereof, as stated in the following. The results are illustrated in Fig. 1.

(1) $Y_2O_3$ raw material was added to 94 mol % of $ZrO_2$ raw material having a purity of 99% by weight and a mean particle size of 2 or 3 µm, and was mixed therewith for 5 hours in a wet manner.

(2) After drying, the resulting mixture was calcined at 1300°C for 2 hours for pre-reaction.

(3) The sintered powders were wet-pulverized for 50 hours to obtain a substrate material.

(4) Fifteen (15) % by weight of a binder (polyvinyl butyral) were added to the substrate, and the resulting product was mixed with toluene, etc. to form a sheet-like product having a thickness of 0.7 mm.

(5) $Al_2O_3$ of 92% purity, by weight, (with the balance being impurities 5% $SiO_2$ and 2% MgO and the mean particle size being 1 to 2 µm) and an organic binder (10% by weight of polyvinyl butyral) were mixed together with a solvent acetone to form a pasty coating material. Using this paste, a sheet having a thickness of about 50 µm was also prepared.

(6) (i) The paste obtained in the step (5) was coated onto the substrate sheet by means of screen printing each 30 µm on each side). (ii) The 50 µm-thick sheet obtained in the step (5) was laminated by means of thermo compression bonding making up each 50 or 100 µm on each side). The thus prepared green material was cut into a width of 5 mm and a length of 45 mm, and was sintered at 1520°C for 4 hours to obtain test pieces.

It has evidently been found from Fig. 1 that all the plate-like sintered bodies having on both sides the screen-printed layers of each 30 µm, the laminated layers of each 50 µm and the laminated layers of each 100 µm provide a much improved bending strength over the sintered product consisting of the substrate alone or the coating material alone. The products according to the present invention show a strength of 50 kg/mm$^2$ even after 1000 hour-durability testing at 250°C, and exhibit excellent stability at lower temperatures. It is to be noted that a product obtained by forming a 0.25 mm-thick green sheet on a 0.35 mm-thick green sheet tore up into pieces due to crack formation after sintering.

It is to be understood that the present invention is applicable to not only the $ZrO_2$-base sintered bodies required to have strength, but also only that portion required to have strength. The present invention is also applicable to oxygen sensors required to have strength. Besides, a further increased reinforcing effect is attained in an electrolyte having high conductivity, say, within a range where a larger amount of the $Y_2O_3$ stabilizer is contained.

### Example 2

(1) Six (6) mol % of $Y_2O_3$ were added to $ZrO_2$ (having a mean particle size of 2 µm and a purity of 99% by weight), and an organic binder was added to the resulting product to form a sheet having generally a thickness of 0.8 mm and (partly a thickness of 0.7 mm) (hereinafter referred to as substrate I).

(2) Ten (10) mol % of an organic binder (polyvinyl butyral) were added to $Al_2O_3$ having a mean particle size of 1.5 µm (and having a purity by weight of 92% and containing 5% $SiO_2$, 2% MgO and 1% CaO) to form a paste (coating 1) and further prepare a sheet (coating 2).

(3) Two (2) % by weight (to 5% by weight) of $ZrO_2$ having a mean particle size of 2 µm and a purity by weight of 99% were added to the paste material to form a paste (coating 3).

(4) The substrate I was coated on both sides with the coating 1 into a thickness of about 60 µm by means screen printing. The substrate I was also laminated with the coating 2 by means of thermocompression bonding (at 80°C).

(5) Removal of resins was effected at 250°C for 10 hours. These samples were cut into a width of 5 mm and a length of 45 mm, and sintered at 1520°C for 4 hours. The sintered samples were subjected to three-point bending test at a span of 18 mm. The results are set forth in Tables 1 and 2.

Table 1

| Test Piece No. | | | Structure | Thickness of Green Coating/ Thickness of Green Substrate | Bending Strength kg/mm$^2$ | Remarks | Range |
|---|---|---|---|---|---|---|---|
| Shrinkage Modulus Substrate 1.245 Coating Layer 1.198 | 21 | | Substrate I Alone | 0  /0.8 | 18–21 | — | A |
| | 22 | | Substrate I + Coating 1    One Side | 0.06/0.8 | 50–55 | Small Warpage Produced | A |
| | 23 | | "           Both Sides | 0.12/0.8 | 53–60 | — | B |
| | 24 | | Substrate I + Coating 2    One Side | 0.20/0.8 | Large Warpage, No Measurement | | A |
| | 25 | | "           Both Sides | 0.40/0.8 | 51–63 | — | B |
| | 26 | | "                " | 0.55/0.5 | Cracking | — | A |

\* Note:  Total value of both coatings

A:  departing from the range
B:  within the claimed range

Table 2

| Test Piece No. | Ratio of Shrinkage Modulus $\ell_0/\ell_1$ Subst/Coat | Shrinkage Modulus $\ell_0/\ell_1$ | Bending Strength kg/mm$^2$ | Thickness of Green Coating\*/ Thickness of Green Substrate mm/mm | Structure | Range |
|---|---|---|---|---|---|---|
| 27 | 1.05 | Substrate 1.245 Coating  1.185 | 55–65 | 0.06/0.7 | Substrate I /Both + Coating 3 / Sides | B |
| 28 | 1.064 | Substrate 1.275 Coating  1.198 | 30–35 | 0.06/0.7 | Substrate II /Both + Coating 1 / Sides | B |
| 29 | | | 20–25 | 0  /0.9 | Substrate II Alone | A |
| 30 | 1.087 | Substrate 1.302 Coating  1.198 | About 65\*\* | 0.06/0.75 | Substrate III/Both + Coating 1 / Sides | A |
| 31 | | | About 65 | 0  /0.75 | Substrate III      Alone | A |

\*  Total value of both coatings
\*\* Cracks easily occur due to snake like deformation in transverse direction of the substrate plane

In Table 2, Substrate II :  $Y_2O_3$   8 moles   $\ell_0/\ell_1$ = 1.275
                        Substrate III:  $Y_2O_3$   4 moles   $\ell_0/\ell_1$ = 1.302

(Substrate III contains in total of 8 wt. % of $Al_2O_3$, Silica, etc.)

It is noted that the substrate (III) containing less than 5 mol % of $Y_2O_3$ tends to be reduced in bending strength to about 1/2 after 1000 hr-durability testing at a temperature of 700°C or less.

A:  out of the claimed scope
B:  within the claimed scope

## Example 3

**Preparation of Test Piece 31**

(1) Six (6) mol % of $Y_2O_3$ (having a mean particle size of 0.5 to 1 μm and a purity of no less than 99.9%) were added to $ZrO_2$ raw material (having a mean particle size of 1 to 2 μm and a purity of no less than 99%), and were wet-mixed therewith for 5 hours in a ball mill. After drying, the resulting mixture was calcined at 1300°C for 2 hours. The thus sintered powders are wet-pulverized for 50 hours in a ball mill to obtain the starting powders for a zirconia solid electrolyte, 80% or more of which are no higher than 25 μm.

(2) The starting powders were mixed with a binder and a solvent to obtain a slurry, which was then formed into a sheet having a given thickness (about 0.8 mm) by the doctor blade technique.

(3) As the starting maerial for coating layers, use was made of $Al_2O_3$ (92% by weight, the remainder being impurities mainly MgO; particle size = 90% is less than 2.5 μm). An organic binder and a solvent butyl carbidol were mixed in that starting material to prepare a paste.

(5) With the use of screen printing, the sheet obtained in the step 2 was screen-printed on its both sides with the paste for alumina coating obtained in the step (4) into a thickness of 30 μm.

(6) For the measurement of mechanical strength, the thus obtained product was cut into a width of 5 mm and a length of 45 mm, and was thereafter sintered at 1520°C for 4 hours in the atmosphere to prepare a zirconia-base solid electrolyte plate (having a thickness of 0.65 mm), on both sides thereof including dense alumina coating layers of about each 25 microns in thickness.

**Preparation of Test Pieces 32-1 and 32-2**

In order to provide platinum layers on the dense alumina coating layers of the test piece 31, the starting material for such layers were prepared in the following manner.

Five (5) parts by weight of the zirconia solid electrolyte material were added as the co-matrix to 100 parts by weight of platinum (black:sponge = 2:1), and an organic binder and a solvent butyl carbidol were further added to obtain a paste for the platinum layers.

(8) This was screen-printed on one or both sides of the sheet obtained in a step similar to the step (5) for the test piece 31 into a thickness of 30 μm (the thickness of the alumina paste to which the platinum paste is to be applied was about 15 μm).

(9) After cut into width of 5 mm and a length of 45 mm, this was sintered at 1520°C for 4 hours in the atmosphere to obtain a zirconia-base solid electrolyte plate (having a thickness of 0.65 mm) of a multi-layer structure that has on its each side a dense alumina layer of each about 10 μm in thickness and an about 25 μm-thick platinum layer contiguous thereto. This is designed as the test piece 32-1. Prepared was also a plate having on one side a 10 μm-thick dense alumina layer and an about 25 μm-thick platinum layer contiguous thereto and on the other side a 25 μm thick dense alumina layer alone. This is designated as the test piece 32-2.

**Preparation of Test Piece 33**

(10) By a step similar to the step (5) for the tst piece 31, an alumina paste was screen-printed on one side alone.

(11) After having cut into a width of 5 mm and a length of 45 mm, this was sintered at 1520°C for 4 hours in the atmosphere to prepare a zirconia-base solid electrolyte plate (having a thickness of 0.65 mm) having on one side alone an about 25 μm-thick dense alumina coating layer.

**Preparation of Test Piece 35**

(16) After having been cut into a width of 5 mm and a length of 45 mm, the sheet obtained in the step (2) for the test piece 31 was sintered at 1520°C for 4 hours in the atmosphere to prepare a simple zirconia electrolyte plate (having a thickness of 0.65 mm).

**Preparation of Test Piece 36**

(17) The paste obtained in the steps (3) and (4) in the test piece 31 was formed into an alumina sheet having a thickness of about 0.8 mm by means of the doctor blade technique.

(18) After having cut into a width of 5 mm and a length of 45 mm, this was sintered at 1520°C for 4 hours in the atmosphere to prepare a simple alumina plate (having a thickness of 0.65 mm).

The bending strength, at normal temperature, of the thus prepared test pieces was measured at a span of 18 mm in the three-point supporting manner. The results are set forth in Table 3.

Table 3

| Test Piece No. | Bending Strength (Room Temperature) $kg/mm^2$ | Remarks |
|---|---|---|
| 31 | 45-65 | Present Invention |
| 32-1 | 50-65 | " |
| 32-2 | 50-65 | " |
| 33 | Slight warpage produced 45-60 | Control |
| 34 | 17-25 | " |
| 35 | 17-20 | " |
| 36 | 40-45 | Reference |

Example 4

A sheet having a thickness of 0.8 mm was prepared from a zirconia solid electrolyte material (containing 6 mol % of $Y_2O_3$), which was the same as in the step (1) for the aforesaid test piece 31 by the doctor blade technique, and was cut into width of 10 mm and a length of 50 mm. As illustrated in Fig. 2, the alumina paste obtained in the steps (3) and (4) for the aforesaid test piece 31 was screen-printed over the entire surface of that sheet, except for the leading or free end portion of 10 mm in length, into a thickness of 15 μm.

Next, this sheet was screen-printed on both its sides into a thickness of 30 μm with the platinum paste used for the step (7) for the aforesaid test piece 32 in such a manner that electrodes (of 2 mm in width) were formed on the leading end portions free from any alumina paste, and a lead portion (of 1.0 mm in width) was formed, extending from the electrodes and terminating on the retaining end portion to be fixed on which the alumina paste had been printed (Fig. 3).

The same alumina paste was screen-printed on the alumina plate already printed on the aforesaid sheet into a thickness of 30 μm, provided, however, that the end of the lead was partly exposed to view on the retaining end portion (Fig. 4).

This was sintered at 1520°C for 4 hours in the atmosphere to prepare a functional element (No. 41) of a size shown in Fig. 6, which is for instance suitable for use in an incomplete combustion sensor.

On the other hand, sawdust was incorporated into the alumina paste obtained in the steps (3) and (4) for the test piece 31 as the organic coarse particles for forming through-pores therein after sintering. The resulting sawdust-containing alumina paste was screen-printed on the entire surface of the intermediate product as illustrated in Fig. 3. Furthermore, the alumina paste obtained in the steps (3) and (4) for the aforesaid test piece 31 was screen-printed on the portion of the aforesaid intermediate product, except for the electrode-attached part or the electrochemically operable part, into a thickness of 30 μm, to thereby obtain a functional element (No. 42) as illustrated in Fig. 5.

For the purpose of comparison, first and second control functional elements were prepared. The first control element was made under the conditions equivalent to the functional element No. 41, provided, however, that the zirconia-base solid electrolyte sheet was printed directly with platinum electrodes and a lead portion therefor, and no printing of an alumina paste for the dense alumina layer was effected on its one side. The second control element was made under the equivalent conditions, provided however that the zirconia-base solid electrolyte sheet was printed directly with platinum electrodes and a lead portion therefor, and no printing of alumina paste for the dense alumina layer was effected on both sides of the electrolyte sheet.

The functional elements 10 according to the aforesaid two examples and the control functional elements were fixedly inserted into an elongate slot in a fitting member 11 for fixation through an adhesive layer (alumina cement 12), leaving the portions extending from the extremities by 25 mm as the free ends,

8

# EP 0 166 445 B1

as illustrated in Figs. 6 and 7. In Fig. 6, "1" represents the zirconia-base solid electrolyte substrate, "2" dense alumina protective layer, and "4" lead portion, respectively. The middle portion, viz., the portion spaced away from the fulcrum 13 by 21 mm was bent perpendicularly with respect to the plate to determine the force when it was broken. The results are set forth in Table 4.

Table 4

| Samples | Formation of Reinforcing | P(Force required for Breakage kg) |
|---|---|---|
| Function Element No. 41 | Both Sides | 0.5 -0.7 |
| Function Element No. 42 | " | .0.55-0.75 |
| First Control Function element | One Side | 0.4 -0.6 large warpage |
| Second Control Function Element | None | 0.2 -0.3 |

From the table, it is found that the mechanical strength of the zirconia solid electrolyte-function elements are significantly reinforced.

As explained above, since the zirconia solid electrolyte-functional elements according to the present invention have excellent mechanical strength, it is unlikely that breaking accidents may arise during processing or assembling, or in use. Due to the fact that the lead wire is provided on the alumina insulating layer, the insulating properties of the lead portion are improved.

The illustrated embodiments has one retaining portion, however a plurality of retaining portions may be provided, too. On the other hand, a plurality of electrochemically operating portions may be provided too.

## Claims

1. Reinforced zirconia-base sintered body being partially or wholly stabilized characterized in that a plate-like sintered substrate (1) of a partially or wholly stabilized zirconia-base sintered mass is provided with on each side thereof an alumina-base protective layer (2) having a given thickness.

2. A reinforced sintered body as defined in Claim 1, in which the thickness ratio of each alumina-base protective layer (2) to said plate-like sintered substrate (1) is 1/100 to 25/100.

3. A reinforced sintered body as defined in Claim 1 or 2, in which the sintered substrate (1) has a thickness of 0.1 to 5 mm.

4. A reinforced sintered body as defined in Claim 3, in which the sintered substrate (1) has a thickness of 0.1 to 2 mm.

5. A process for the production of a reinforced zirconia-base sintered body being partially or wholly stabilized, comprising:
   providing a green alumina protective layer on each side of a plate-like zirconia-base substrate, and
   sintering the resultant mass so as to simultaneously sinter the substrate and the protective layers to form an integral sintered body.

6. A plate-like zirconia-base solid electrolyte functional element comprising a plate-like zirconia-base solid electrolyte substrate (1), the substrate including at its free end an electrochemically operable portion (5) provided with an electrode (3) on each side of the substrate (1), another portion (7) to be retained, and an arm portion (6) defined by an intermediate portion between the free end and said another portion (7), characterized in that a reinforcing coating layer (2) is formed on each side of said zirconia-base solid electrolyte substrate (1), the reinforcing coating layers (2) extending at least from said arm portion (6) to said another portion (7) to be retained, said coating layers (2) being formed of an electrically insulating alumina-base ceramic material having a shrinkage modulus smaller than that of said zirconia-base solid electrolyte substrate (1).

7. A functional element as defined in Claim 6, in which said ceramic material is alpha-alumina.

9

# EP 0 166 445 B1

8. A functional element as defined in Claims 5 or 6, in which said zirconia-base solid electrolyte is wholly or partially stabilized primarily by yttrium oxide.

9. A functional element as defined in any of Claims 6 to 8, in which the ratio of the shrinkage modulus between said zirconia-base electrolyte substrate and the ceramic material forming the coating layers is 1.01 to 1.08.

10. A functional element as defined in any of Claims 6 to 9, in which the thickness ratio of each of said coating layers and said zirconia solid electrolyte plate is 1/100 to 25/100.

11. A functional element as defined in any of Claims 6 to 10, in which said zirconia-base solid electrolyte substrate has a thickness of 0.1 to 5 mm.

12. A functional element as defined in Claim 11, in which said zirconia-base solid electrolyte substrate has a thickness of 0.1 to 2 mm.

13. A functional element as defined in any of Claims 6 to 11, in which said lead portion (4) is formed on the surface of said insulating ceramic material (2).

**Patentansprüche**

1. Verstärkter Sinterkörper auf der Basis von Zirkoniumoxid, der teilweise oder ganz stabilisiert ist, dadurch gekennzeichnet, daß ein plattenartiges, gesintertes Substrat (1) aus einer teilweise oder ganz stabilisierten gesinterten Masse auf der Basis von Zirkoniumoxid auf jeder Seite eine Schutzschicht (2) auf der Basis von Aluminiumoxid mit einer gegebenen Dicke aufweist.

2. Verstärkter Sinterkörper nach Anspruch 1, in dem das Dickenverhältnis jeder Schutzschicht (2) auf der Basis von Aluminiumoxid zu dem plattenartigen, gesinterten Substrat (1) 1:100 bis 25:100 beträgt.

3. Verstärkter Sinterkörper nach Anspruch 1 oder 2, in dem das gesinterte Substrat (1) eine Dicke von 0,1 bis 5 mm aufweist.

4. Verstärkter Sinterkörper nach Anspruch 3, in dem das gesinterte Substrat (1) eine Dicke von 0,1 bis 2 mm aufweist.

5. Verfahren zur Herstellung eines verstärkten Sinterkörpers auf der Basis von Zirkoniumoxid, der teilweise oder ganz stabilisiert ist,
bei dem eine grüne Aluminiumoxidschutzschicht auf jede Seite eines plattenartigen Substrats auf der Basis von Zirkoniumoxid aufgebracht wird, und
die erhaltene Masse gesintert wird, um das Substrat und die Schutzschichten zur Ausbildung eines integralen Sinterkörpers gleichzeitig zu sintern.

6. Plattenartiges Festelektrolyt-Funktionselement auf der Basis von Zirkoniumoxid mit einem plattenartigen Festelektrolyt-Substrat (1) auf der Basis von Zirkoniumoxid, wobei das Substrat an seinem freien Ende einen elektrochemisch arbeitenden Abschnitt (5), ausgerüstet mit einer Elektrode (3) auf jeder Seite des Substrats (1), einem anderen Abschnitt (7), der gehalten wird, und einem Armabschnitt (6), der als ein Zwischenabschnitt zwischen dem freien und dem anderen Abschnitt (7) definiert ist, aufweist, dadurch gekennzeichnet, daß eine verstärkende Überzugsschicht (2) auf jeder Seite des Festelektrolyt-Substrats (1) auf der Basis von Zirkoniumoxid ausgebildet ist, die verstärkenden Überzugsschichten (2) sich von wenigstens dem Armabschnitt (6) bis zu dem anderen Abschnitt (7), der gehalten wird, erstrecken und die Überzugsschichten (2) aus einem elektrisch isolierenden Keramikmaterial auf der Basis von Aluminiumoxid mit einem Schrumpfmodul, der kleiner als der des Festelektrolyt-Substrats (1) auf der Basis von Zirkoniumoxid ist, gebildet sind.

7. Funktionselement nach Anspruch 6, in dem das genannte Keramikmaterial alpha-Aluminiumoxid ist.

8. Funktionselement nach Anspruch 5 oder 6, in dem der genannte Festelektrolyte auf der Basis von Zirkoniumoxid ganz oder teilweise in erster Linie mit Yttriumoxid stabilisiert ist.

9. Funktionselement nach einem der Ansprüche 6 bis 8, in dem das Verhältnis der Schrumpfmoduln zwischen dem genannten Elektrolyt-Substrat auf der Basis von Zirkoniumoxid und dem Keramikmaterial, das die Überzugsschichten bildet, 1,01 bis 1,08 beträgt.

10. Funktionselement nach einem der Ansprüche 6 bis 9, in dem das Dickenverhältnis von jeder der genannten Überzugsschichten und der genannten Zirkoniumoxid-Festeletrolytplatte 1:100 bis 25:100 beträgt.

11. Funktionselement nach einem der Ansprüche 6 bis 10, in dem das Festelektrolyt-Substrat auf der Basis von Zirkoniumoxid eine Dicke von 0,1 bis 5 mm aufweist.

12. Funktionselement nach Anspruch 11, in dem das Festelektrolyt-Substrat auf der Basis von Zirkoniumoxid eine Dicke von 0,1 bis 2 mm aufweist.

13. Funktionselement nach einem der Ansprüche 6 bis 11, in dem der genannte Bleiabschnitt (4) auf der Oberfläche des isolierenden Keramikmaterials (2) ausgebildet ist.

**Revendications**

1. Corps fritté renforcé à base d'oxyde de zirconium, partiellement ou totalement stabilisé, caractérisé en ce qu'un substrat fritté (1) en forme de plaque constitué d'une masse frittée à base d'oxyde de zirconium partiellement ou totalement stabilisée est pourvu, sur chacun de ses côtés, d'une couche protectrice (2) à base d'aluminium ayant une épaisseur donnée.

10

**EP 0 166 445 B1**

2. Corps fritté renforcé tel que défini dans la revendication 1, dans lequel le rapport de l'épaisseur de chaque couche protectrice (2) à base d'alumine à l'épaisseur du substrat fritté (1) en forme de plaque va de 1/100 à 25/100.

3. Corps fritté renforcé tel que défini dans la revendication 1 ou 2, dans lequel le substrat fritté (1) a une épaisseur de 0,1 à 5 mm.

4. Corps fritté renforcé tel que défini dans la revendication 3, dans lequel le substrat fritté (1) a une épaisseur de 0,1 à 2 mm.

5. Procédé de production d'un corps fritté renforcé à base d'oxyde de zirconium, partiellement ou totalement stabilisé, qui consiste:

à former une couche protectrice d'alumine à l'état vert sur chaque côté d'un substrat à base d'oxyde de zirconium en forme de plaque, et

à fritter la masse résultante de manière à réaliser simultanément le frittage du substrat et des couches protectrices pour former un corps fritté d'une seule pièce.

6. Elément fonctionnel à électrolyte solide à base d'oxyde de zirconium en forme de plaque comprenant un substrat (1) constituant un électrolyte solide à base d'oxyde de zirconium en forme de plaque, le substrat comprenant à son extrémité libre une portion (5) apte à une opération électrochemique, pourvue d'une électrode (3) de chaque côté du substrat (1), une autre portion (7) devant être retenue et une portion (6) formant un bras, définie par une portion intermédiaire entre l'extrémité libre et l'autre portion (7), caractérisé en ce qu'une couche de revêtement de renforcement (2) est formée sur chaque côté du substrat (1) d'électrolyte solide à base d'oxyde de zirconium, les couches de revêtement de renforcement (2) s'étendant au moins depuis la portion formant le bras (6) jusqu'à l'autre portion (7) devant être retenue, les couches de revêtement (2) étant formées d'une matière céramique à base d'alumine électriquement isolante ayant un module de retrait inférieur à celui du substrat (1) d'électrolyte solide à base d'oxyde de zirconium.

7. Elément fonctionnel tel que défini dans la revendication 6, dans lequel la matière céramique consiste en alumine alpha.

8. Elément fonctionnel tel que défini dans la revendication 5 ou 6, dans lequel l'électrolyte solide à base de zirconium est entièrement ou partiellement stabilisé principalement par de l'oxyde d'yttrium.

9. Elément fonctionnel tel que défini dans l'une quelconque des revendications 6 à 8, dans lequel le rapport des modules de retrait entre le substrat d'électrolyte à base d'oxyde de zirconium et la matière céramique formant les couches de revêtement va de 1,01 à 1,08.

10. Elément fonctionnel tel que défini dans l'une quelconque des revendications 6 à 9, dans lequel le rapport des épaisseurs de chacune des couches de revêtement et de la plaque d'électrolyte solide à base d'oxyde de zirconium va de 1/100 à 25/100.

11. Elément fonctionnel tel que défini dans l'une quelconque des revendications 6 à 10, dans lequel ledit substrat d'électrolyte solide à base d'oxyde de zirconium a une épaisseur de 0,1 à 5 mm.

12. Elément fonctionnel tel que défini dans la revendication 11, dans lequel le substrat d'électrolyte solide à base d'oxyde de zirconium a une épaisseur de 0,1 à 2 mm.

13. Elément fonctionnel tel que défini dans l'une quelconque des revendications 6 à 11, dans lequel la portion conductrice (4) est formée à la surface de ladite matière céramique isolante (2).

11

## FIG. 1

FIG. 2

(a)

1      2

(b)

2

1      2

FIG. 3

(a)

5      6      7

1   3      4      2

(b)

1   3      4      2

## FIG. 4

### ( a )

### ( b )

## FIG. 5

### ( a )

### ( b )

## FIG. 6

| | |
|---|---|
| thickness of 1 | 0.65 mm |
| thickness of 2 (minimum) | 10 μm |
| thickness of 4 (Pt) | 25 μm |
| width of 4 | 1 mm |

## FIG. 7

4